# EUROPÄISCHE PATENTANMELDUNG

(11) **EP 4 571 147 A1**
(43) Veröffentlichungstag der Anmeldung: **18.06.2025**
(21) Anmeldenummer: 23216561.3
(22) Anmeldetag: 14.12.2023
(51) Int. Cl.: F16H 57/04

(54) **SCHMIERÖLSYSTEM ZUR DRUCKSCHMIERUNG EINER DREHMOMENTÜBERTRAGENDEN KUPPLUNG EINES GETRIEBES**

(71) Anmelder: Flender GmbH, 46395 Bocholt (DE)
(72) Erfinder: HAAKE, Norbert, 46395 Bocholt (DE); THELING, Julian, 46395 Bocholt (DE)
(74) Vertreter: Michalski Hüttermann & Partner Patentanwälte mbB

(57) **Zusammenfassung**

Es ist ein Schmierölsystem (26) zur Druckschmierung einer drehmomentübertragenden Kupplung (42) eines Getriebes vorgesehene mit einem feststehenden Getriebegehäuse (30), wobei das Getriebegehäuse (30) einen Zuführkanal (28) zur Zuführung eines druckbeaufschlagten Schmieröls aufweist, einer relativ zu dem Getriebegehäuse (30) drehbaren ersten Getriebekomponente (32), wobei die erste Getriebekomponente (32) einen über eine Spaltdichtung (36) mit dem Zuführkanal (28) fluidisch kommunizierenden Versorgungskanal (38) zur Aufnahme des über den Zuführkanal (28) und die Spaltdichtung (36) zugeführten Schmieröls aufweist, und einer über die Kupplung (42) drehmomentübertragend mit der ersten Getriebekomponente (32) gekoppelten zweiten Getriebekomponente (44), wobei der Versorgungskanal (38) ausgestaltet ist das Schmieröl zur Kupplung (42) zu führen, wobei das Getriebegehäuse (30) mindestens einen mit der Spaltdichtung (32) fluidisch kommunizierenden Rückflusskanal (46) zur schwerkraftgetriebenen Abfuhr des Schmieröls aus der Spaltdichtung (32) aufweist. Mit Hilfe des Rückflusskanals (46) ist eine Beschädigung durch Verschleißpartikel vermieden und eine hohe Lebensdauer eines druckgeschmierten Getriebes ermöglicht.

## Beschreibung

Die Erfindung betrifft ein Schmierölsystem, mit dessen Hilfe eine Druckschmierung einer drehmomentübertragenden Kupplung eines Getriebes erfolgen kann. Die Erfindung betrifft ferner ein Getriebe, insbesondere ein Windgetriebe und ein Industriegetriebe, mit einem derartigen Schmierölsystem sowie ein Datenagglomerat, mit dessen Hilfe derartige Vorrichtungen hergestellt und simuliert werden können.

Aus WO 2015/032591 A1 ist ein Schmierölsystem bekannt, bei dem ein Schmieröl zur Druckschmierung einer zwischen zwei Getriebekomponenten verschiedener Getriebestufen eines Windgetriebes für eine Windkraftanlage ausgebildeten Zahnkupplung durch ein feststehendes Getriebegehäuse und einer zwischen dem Getriebegehäuse und einer rotierenden Getriebekomponente ausgebildeten Spaltdichtung in einen in der Getriebekomponente ausgebildeten und zu der Zahnkupplung führenden Ölführkanal gepumpt werden kann.

Es besteht ein ständiges Bedürfnis die Lebensdauer druckgeschmierter Getriebe zu erhöhen.

Es ist die Aufgabe der Erfindung Maßnahmen aufzuzeigen, die eine hohe Lebensdauer eines druckgeschmierten Getriebes ermöglichen.

Die Lösung der Aufgabe erfolgt durch ein Schmierölsystem mit den Merkmalen des Anspruchs 1, ein Getriebe mit den Merkmalen des Anspruchs 12, einem Windgetriebe mit den Merkmalen des Anspruchs 13, einem Industriegetriebe mit den Merkmalen des Anspruchs 14 sowie einem Datenagglomerat mit den Merkmalen des Anspruchs 15. Bevorzugte Ausgestaltungen sind in den Unteransprüchen und der nachfolgenden Beschreibung angegeben, die jeweils einzeln oder in Kombination einen Aspekt der Erfindung darstellen können, wobei der Schutzbereich durch die Ansprüche bestimmt wird. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Ein Aspekt der Erfindung betrifft ein Schmierölsystem zur Druckschmierung einer drehmomentübertragenden Kupplung eines Getriebes, mit einem feststehenden Getriebegehäuse, wobei das Getriebegehäuse einen Zuführkanal zur Zuführung eines druckbeaufschlagten Schmieröls aufweist, einer relativ zu dem Getriebegehäuse drehbaren ersten Getriebekomponente, wobei die erste Getriebekomponente einen über eine Spaltdichtung mit dem Zuführkanal fluidisch kommunizierenden Versorgungskanal zur Aufnahme des über den Zuführkanal und die Spaltdichtung zugeführten Schmieröls aufweist, und einer über die Kupplung drehmomentübertragend mit der ersten Getriebekomponente gekoppelten zweiten Getriebekomponente, wobei der Versorgungskanal ausgestaltet ist das Schmieröl zur Kupplung zu führen, wobei das Getriebegehäuse mindestens einen mit der Spaltdichtung fluidisch kommunizierenden Rückflusskanal zur schwerkraftgetriebenen Abfuhr des Schmieröls aus der Spaltdichtung aufweist.

Wenn, beispielsweise mit Hilfe einer Ölpumpe, das Schmieröl mit einem hinreichend hohen Förderdruck dem Zuführkanal druckbeaufschlagt zugeführt wird, stellte die Spaltdichtung eine so hohen Strömungswiderstand bereit, dass nahezu der gesamte Ölmassenstrom aus dem Zuführkanal des feststehenden Getriebegehäuses an den Versorgungskanal in der rotierbaren ersten Getriebekomponente übergeben werden kann. Ein Leckagestrom des Schmieröls über die Spaltdichtung ist in der Regel vernachlässigbar. Das druckbeaufschlagte Schmieröl kann den Versorgungskanal in der Nähe der, insbesondere als Zahnkupplung ausgestalteten, drehmomentübertragenden Kupplung verlassen und die drehmomentübertragende Kupplung zum Zwecke der Schmierung zwischen der ersten Getriebekomponente und der zweiten Getriebekomponente in der drehmomentübertragende Kupplung durchströmen. Nach dem Passieren der drehmomentübertragende Kupplung kann das aus der drehmomentübertragenden Kupplung austretende Schmieröl aufgefangen und einem Ölsumpf zugeführt werden, aus dem die Ölpumpe das Schmieröl wieder in den Zuführkanal zurückpumpen kann. Falls sich in der drehmomentübertragenden Kupplung aufgrund von nicht verhinderbaren Verschleißeffekten ein Abrieb oder sonstige Kontaminationen des Schmieröls ergeben sollten, kann der Abrieb von dem druckbeaufschlagten Schmieröl aus der drehmomentübertragenden Kupplung herausgespült werden und in sich am Boden des Ölsumpfes ablagern. Ein Ansaugen des am Boden abgelagerten Abriebs durch die Pumpe kann durch eine geeignete Formgebung des Ölsumpfes, der Anordnung einer Ansaugöffnung der Ölpumpe im Ölsumpf und/oder eine geeignete Filtertechnik leicht vermieden werden. Trotz eines in der drehmomentübertragenden Kupplung stattfindenden Verschleißes ist eine Beschädigung von anderen druckgeschmierten Komponenten durch Verschleißpartikel der drehmomentübertragenden Kupplung im bestimmungsgemäßen regulären Betrieb sicher vermieden.

Es wurde jedoch erkannt, dass im laufenden Betrieb des Getriebes immer wieder Betriebssituationen auftreten können, in denen eine Druckbeaufschlagung des Schmieröls nicht oder nicht in einem ausreichenden Ausmaß vorliegt. Beispielsweise kann bei einem Stillstand des Getriebes und/oder in einem Trudel- und/oder Schleppbetrieb des Getriebes eine aus dem Getriebe abgezweigte Leistung zum Betrieb der Ölpumpe nicht ausreichen, den gewünschten Förderdruck für das Schmieröl aufzubauen. Dies könnte dazu führen, dass sich bei den dadurch ergebenen tribologischen Verhältnissen ein Ölmassenstrom entgegen der designierten Strömungsrichtung von der drehmomentübertragenden Kupplung zur Spaltdichtung erfolgen kann, insbesondere wenn der Ölmassenstrom schwerkraftgetrieben von radial innen über den Versorgungskanal nach radial außen zur Spaltdichtung getrieben wird. Dadurch kann sich am zur Spaltdichtung weisenden Eingang des Versorgungskanals über die Erstreckung des Versorgungskanals ein hydrostatischer Druck aufbauen, der das Schmieröl in die Spaltdichtung drückt. Hierbei wäre es möglich, dass Verschleißpartikel aus der drehmomentübertragenden Kupplung zusammen mit einem Leckagestrom des Schmieröls die Spaltdichtung passieren und an jenseits der Spaltdichtung liegende Volumina des Getriebes gelangen können, in denen die Verschleißpartikel Schäden anrichten können und die Lebensdauer des Getriebes reduzieren könnten.

Durch den mit der Spaltdichtung fluidisch kommunizierenden Rückflusskanal kann jedoch ein derartiger mit Verschleißpartikeln aus der drehmomentübertragenden Kupplung beladener Leckagestrom des Schmieröls aus der Spaltdichtung abgeführt werden, bevor die Verschleißpartikeln von dem Leckagestrom des Schmieröls an eine für die Lebensdauer des Getriebes ungünstige Stelle gelangen können. Zur Abfuhr des Leckagestroms ist ein Schwerkrafteffekt in dem Rückflusskanal bereits ausreichend, so dass ein aktiver Aufbau eines Förderdrucks, beispielsweise mit Hilfe einer Pumpe, nicht erforderlich ist. Stattdessen ist es ausreichend den Rückflusskanal an einer Stelle in die Spaltdichtung einmünden zu lassen, an der ein schwerkraftgetriebenes Abführen angesammelten Schmieröls ohne externe Energiezufuhr erfolgen kann. Der Herstellungsaufwand für die Erzeugung eines geeigneten Rückflusskanals ist sehr gering und allenfalls nur mit geringen Kosten verbunden. Von dem Zuführkanal und/oder von dem Versorgungskanal in die Spaltdichtung kriechendes Schmieröl kann über den Rückflusskanal abgeführt werden, bevor das Schmieröl die Spaltdichtung über die gesamte axiale Erstreckung passieren kann. Mit Hilfe des Rückflusskanals des Schmierölsystems kann mit Verschleißpartikeln aus der drehmomentübertragenden Kupplung kontaminiertes Schmieröl in Betriebssituationen mit einem zu niedrigen Förderdruck schwerkraftgetrieben abgeführt werden, so dass eine Beschädigung durch Verschleißpartikel vermieden und eine hohe Lebensdauer eines druckgeschmierten Getriebes ermöglicht ist.

Die drehmomentübertragende Kupplung kann insbesondere als Zahnkupplung ausgestaltet sein. Hierbei kann eine drehmomentübertragende Koppelung zwischen der ersten Getriebekomponente und der zweiten Getriebekomponente durch ein Eingreifen einer Innenverzahnung in eine Außenverzahnung oder sonstige ineinander eingreifende formschlüssige Konturierungen erzeugt werden, indem während der Montage und der Herstellung der drehmomentübertragende Kupplung eine axiale Relativbewegung zwischen der ersten Getriebekomponente und der zweiten Getriebekomponente erfolgt. Bei der Montage ist es möglich, dass infolge der axialen Relativbewegung in Umfangsrichtung aneinander anschlagende Kontaktflächen aneinander verschleißbehaftet abgleiten und durch den dabei entstehenden Abrieb Verschleißpartikel in der drehmomentübertragende Koppelung vorliegen. Gegebenenfalls liegt innerhalb der drehmomentübertragenden Koppelung ein Spiel in axialer Richtung und/oder in Umfangsrichtung vor, das insbesondere bei Lastwechseln zu Verschleißeffekten führen kann, wobei der Verschleiß aber durch das zugeführte Schmieröl zumindest deutlich reduziert werden kann.

Das Getriebe kann mindestens eine Getriebestufe aufweisen, wobei vorzugsweise mindestens zwei, mindestens drei oder mindestens vier Getriebestufen vorgesehen sind. Die jeweilige Getriebestufe kann durch ein Planetengetriebe oder ein Stirnradgetriebe ausgebildet sein. Die jeweilige Getriebestufe ist insbesondere in dem gleichen, gegebenenfalls mehrteiligen, Getriebegehäuse eingesetzt, wobei vorzugsweise ein feststehendes Hohlrad einer als Planetengetriebe ausgestalteten Getriebestufe ein Teil des Getriebegehäuse und/oder ein Teil einer Außenhaut des Getriebegehäuses ausbilden kann. Vorzugsweise ist das Schmierölsystem mit Hilfe von zwei in Drehmomentrichtung des Getriebes nachfolgenden Getriebestufen ausgebildet, wobei es bei einer entsprechend großen Anzahl an Getriebestufen möglich ist mehr als ein erfindungsgemäßes Schmierölsystem in dem Getriebe vorzusehen, wobei die jeweiligen Schmierölsysteme als jeweils separate und voneinander funktional getrennte Einheiten oder als miteinander fluidisch kommunizierende Einheiten, die sich vorzugsweise die selbe Ölpumpe teilen, ausgebildet sein können.

Das Getriebegehäuse ist in dem betrachteten System ein feststehendes und nicht rotierendes Bauteil, in dem die Getriebestufen des Getriebes untergebracht und gelagert sein können. beispielsweise weist das Getriebegehäuse eine Teilung in einer Horizontalebene und/der in einer Radialebene auf, um ein in dem Getriebegehäuse eingehaustes Volumen zugänglich zu machen. Das Getriebegehäuse kann insbesondere an einem Untergrund, beispielsweise ein Fundament, oder einem Maschinenträger in einer Gondel einer Windkraftanalage befestigt sein. Das Getriebegehäuse kann insbesondere einen Ölsumpf ausbilden, in dem das Schmieröl für das Schmierölsystem aufgefangen und gegebenenfalls gekühlt werden kann. Aus diesem Ölsumpf kann die Ölpumpe das Schmieröl mit dem gewünschten Förderdruck in den Zuführkanal pumpen.

Die Ölpumpe, mit dessen Hilfe das druckbeaufschlagte Schmieröls in den Zuführkanals gepumpt werden kann, ist vorzugsweise mechanisch mit dem Getriebe des Schmierölsystems gekoppelt, so dass die Förderleistung zum Betrieb der Ölpumpe aus dem Leistungsfluss des Getriebes abgezweigt werden kann.

Die erste Getriebekomponente und die zweite Getriebekomponente können insbesondere ein Funktionsbauteil einer als Planetengetriebe oder Stirnradgetriebe ausgebildeten Getriebestufe sein. Die erste Getriebekomponente und die zweite Getriebekomponente sind insbesondere jeweils Teil von verschiedenen Getriebestufen, wobei es grundsätzlich möglich ist, dass die erste Getriebekomponente und die zweite Getriebekomponente Teil der selben Getriebestufe sind. Vorzugsweise ist die erste Getriebekomponente eine Nabe eines Planetenträgers einer im Drehmomentfluss nachfolgenden und als Planetengetriebe ausgestalteten Getriebestufe, während die zweite Getriebekomponente eine Sonnenwelle einer im Drehmomentfluss vorhergehenden und als Planetengetriebe ausgestalteten Getriebestufe ist oder umgekehrt. Die erste Getriebekomponente und/oder die zweite Getriebekomponente ist insbesondere zumindest in einem axialen Teilbereich als Hohlwelle ausgestaltet.

Die Spaltdichtung zwischen dem Getriebegehäuse und der ersten Getriebekomponente kann als eine berührungslose Dichtung mit einem in Umfangsrichtung geschlossenen und sich in axialer Richtung erstreckender Ringspalt ausgestaltet sein, wobei das durch den Ringspalt bereitgestellte radiale Spiel derart dimensioniert ist, dass bei den zu erwartenden Materialeigenschaften des Schmieröls, der axialen Erstreckung der Spaltdichtung und der Geometrie des Zuführkanals und des Versorgungskanals eine ausreichende Dichtwirkung erreicht ist, die allenfalls nur einen geringen und in diesem Ausmaß akzeptablen Leckagestrom im bestimmungsgemäßen regulären Betrieb zulässt.

Der Zuführkanal kann an einer Fläche des Getriebegehäuses beginnen, die insbesondere zu einem Innenvolumen des Getriebegehäuses weist. Beispielsweise weist das Getriebegehäuse einen nach radial innen abstehenden Steg auf, mit dessen Hilfe beispielsweise die erste Getriebekomponente und/oder die zweite Getriebekomponente direkt oder indirekt gelagert werden soll, so dass der Steg eine mit einem Anteil in axialer Richtung weisende Fläche ausbildet, an welcher der Zuführkanal beginnen kann. Der Zuführkanal kann an seinem Ende in den Ringspalt der Spaltdichtung einmünden und dort enden. Der Zuführkanal kann durch mehrere jeweils separat, beispielsweise durch Bohren erzeugte, Teilstrecken zusammengesetzt sein, wobei es auch möglich ist, durch nur einen einzigen Herstellungsschritt den gesamten Zuführkanal von seinem Beginn bis zu seinem Ende zu erzeugen. Gegebenenfalls kann von dem Zuführkanal ein weiterer Kanal zu mindestens einer anderen Schmierstelle hin abgehen, so dass sich der Massenstrom des Schmieröls auf zwei oder mehr Kanalstücke aufteilen und verzweigen kann.

Der Versorgungskanal kann an einer zur Spaltdichtung weisenden äußeren Mantelfläche der ersten Getriebekomponente beginnen und in der Nähe der drehmomentübertragenden Kupplung, insbesondere von radial außen her und/oder von einem axialen Ende der drehmomentübertragenden Kupplung, enden, so dass das Schmieröl aus dem Versorgungskanal in die drehmomentübertragende Kupplung gelangen kann. Vorzugsweise sind mehrere, beispielsweise sternförmig in einem gemeinsamen Axialbereich, ausgebildete Versorgungskanäle vorgesehen. Zusätzlich oder alternativ können auch mehrere Versorgungskanäle in axialer Richtung nebeneinander vorgesehen sein. Durch die Mehrzahl der Versorgungskanäle kann die Schmierung in der drehmomentübertragenden Kupplung vergleichmäßigt und verbessert werden. Der Förderdruck des druckbeaufschlagten Schmieröls ist insbesondere ausreichend hoch dimensioniert, dass in einem im regulären Betrieb zu erwartenden Drehzahlbereich Fliehkrafteffekte auf das Schmieröl in dem Versorgungskanal mindestens kompensiert werden. Der Förderdruck des druckbeaufschlagten Schmieröls kann deutlich größer als ein fliehkraftbedingter Gegendruck sein.

Der Rückflusskanal kann an einer zur Spaltdichtung weisenden Innenseite des Getriebegehäuses beginnen und mittelbar oder unmittelbar zu einem in Schwerkraftrichtung tieferen Bereich, insbesondere einen von dem Getriebegehäuse ausgebildeten Ölsumpf, führen. Vorzugsweise kann das über den Rückflusskanal abgeführte Schmieröl über einen Filter geführt werden, so dass im Schmieröl des Rückflusskanals befindliche Verschleißpartikel herausgefiltert werden können und das so gefilterte Schmieröl für das Schmierölsystem wiederverwendet werden kann. Vorzugsweise verläuft der Rückflusskanal von der Spaltdichtung an ausschließlich zumindest mit einem Anteil in Schwerkraftrichtung.

Die schwerkraftgetriebene Abfuhr des Schmieröls kann durch das Eigengewicht des Schmieröls und des damit aufgebauten hydrostatischen Drucks erreicht werden. Insbesondere im Stillstand des Getriebes oder bei einer entsprechend niedrigen Drehzahl liegen keine beziehungsweise keine ausreichend hohe Fliehkrafteffekte vor, welche der schwerkraftgetriebenen Abfuhr des Schmieröls in ausreichender Höhe entgegenwirken können. Insbesondere im Stillstand des Getriebes oder bei einer entsprechend niedrigen Drehzahl kann auch eine der Ölpumpe zugeführte Antriebsleistung nicht hoch genug sein, damit der von der Ölpumpe aufgebaute Förderdruck der schwerkraftgetriebenen Abfuhr des Schmieröls in ausreichender Höhe entgegenwirken kann.

Insbesondere mündet der mindestens eine Rückflusskanal zu dem Versorgungskanal in axialer Richtung versetzt in die Spaltdichtung ein. Eine Leckage des Schmieröls über den Rückflusskanal kann im regulären Betrieb durch die dichtende Stauwirkung der Spaltdichtung vermieden sein. Eine Abfuhr von Schmieröl über den Rückflusskanal findet dadurch nur dann statt, wenn eine Betriebssituation vorliegt, bei welcher das Schmieröl eine entsprechend lange axiale Strecke der Spaltdichtung überhaupt erst passieren kann. Es wird davon ausgegangen, dass der Förderdruck des druckbeaufschlagten Schmieröls bei der Übergabe des Schmieröls von dem Zuführkanal an den Versorgungskanal so hoch sein kann, dass sich Saugstrahleffekte in der Spaltdichtung einstellen. Diese Saugstrahleffekte beim Vorbeiströmen des Schmieröls an den zum Zuführkanal und zum Versorgungskanal weisenden axialen Ränder der Spaltdichtung führen zu einem Unterdruck in dem Ringspalt der Spaltdichtung, infolgedessen in den Ringspalt der Spaltdichtung hineingekrochenes Schmieröl auch gegen eventuell vorliegende Kapillarkräfte aus dem Ringspalt abgesaugt werden kann. Wenn der Förderdruck des druckbeaufschlagten Schmieröls so gering ist, dass dieser Saugstrahleffekt nicht mehr auftritt, ist der Förderdruck auch so gering, dass eine Gefahr durch in den Ringspalt rückströmendes und mit Verschleißpartikeln kontaminiertes Schmieröl besteht, was durch den axial versetzten Rückflusskanal aber rechtzeitig abgeführt werden kann. Besonders bevorzugt ist mindestens ein Rückflusskanal zu dem Zuführkanal und zu dem Versorgungskanal in die eine Axialrichtung und mindestens ein anderer Rückflusskanal zu dem Zuführkanal und zu dem Versorgungskanal in die entgegengesetzte Axialrichtung versetzt vorgesehen.

Vorzugsweise weist die erste Getriebekomponente eine mit der Spaltdichtung fluidisch kommunizierende Rille auf, wobei der Rückflusskanal mittelbar über die Rille mit der Spaltdichtung fluidisch kommuniziert und durch die Rille in einem von der Rille eingenommenen Axialbereich eine Spalttiefe der Spaltdichtung in radialer Richtung größer als in sich an dem Axialbereich der Rille anschließenden Axialbereichen der Spaltdichtung ist. Die Spalttiefe der Rille in radialer Richtung und die Spaltbreite der Rille in axialer Richtung kann groß genug gewählt sein, dass in die Spaltdichtung gekrochenes Schmieröl in der Rille gesammelt und über den mit der Rille fluidisch verbundenen Rückflusskanal abgeführt werden kann. Die Rille kann in Umfangsrichtung geschlossen ausgeführt sein. Es ist aber auch möglich, dass sich die Rille nur teilweise in Umfangsrichtung erstreckt, sofern ein Teil der Rille fluidisch mit der Rückflusskanal verbunden ist und vorzugsweise auch den in Schwerkraftrichtung tiefsten Umfangspunkt umfasst. Insbesondere wenn die erste Getriebekomponente im Stillstand des Getriebes eine definierte Nulllage in Umfangsrichtung automatisch einnimmt, kann eine sich nur teilweise in Umfangsrichtung erstreckende Rille ausreichend sein.

Besonders bevorzugt weist das Getriebegehäuse mindestens einen mit dem Zuführkanal fluidisch verbundenen Schmierkanal zur Schmierung mindestens eines Schmierölverbrauchers auf, wobei insbesondere der Schmierölverbraucher mit der Spaltdichtung fluidisch kommuniziert. Mit Hilfe des von dem Zuführkanal abzweigenden Schmierkanals kann ein Teil des druckbeaufschlagten Schmieröls statt zur drehmomentübertragenden Kupplung zum Schmierölverbraucher, beispielsweise ein zu schmierendes Lager. Das Lager kann insbesondere ein Wälzlager oder ein Gleitlager sein. Eine Schmierung des Schmierölverbraucher mit Hilfe eines Leckagestroms über die Spaltdichtung kann vermieden werden. Stattdessen kann über die Geometrie des Schmierkanals in Kenntnis des zu erwartenden Förderdrucks und der Geometrie des Zuführkanales der Massenstrom an Schmieröl zum Schmierölverbraucher hin genau vorgegeben werden. Zusätzlich oder alternativ zu dem Schmierkanal kann das Getriebegehäuse einen Zusatzschmierkanal aufweisen, der fluidisch getrennt von dem Zuführkanal zu einem Schmierölverbraucher führt, wobei der Zusatzschmierkanal vorzugsweise von der selben Schmierölpumpe wie der Zuführkanal mit Schmieröl versorgt wird. Dies ermöglicht es den Zuführkanal und den Zusatzschmierkanal unabhängig voneinander zu dimensionieren, so dass Auswirkungen auf den Massenstrom in dem einen Kanal im wesentlichen keinen Einfluss auf den Massenstrom in dem anderen Kanal haben.

Insbesondere mündet der Rückflusskanal in axialer Richtung zwischen dem Versorgungskanal und dem Schmierölverbraucher in die Spaltdichtung ein. Dadurch ist der Schmierölverbraucher vor einer Kontamination mit Verschleißpartikeln in einem Leckagestrom von dem Versorgungskanal über die Spaltdichtung bis zum Schmierölverbraucher geschützt, da der mit Verschleißpartikeln kontaminierte Schmierölstrom vorher über den Rückflusskanal abgeführt werden kann und erst gar nicht den Schmierölverbraucher erreicht.

Vorzugsweise ist der Schmierölverbraucher als ein druckgeschmiertes Lager zur Lagerung der ersten Getriebekomponente an dem Getriebegehäuse ausgestaltet. Das Lager kann insbesondere ein Wälzlager oder ein Gleitlager sein. Beispielsweise endet die Spaltdichtung an beiden Axialrichtungen an einem Lager, insbesondere Schrägwälzlager, mit deren Hilfe die erste Getriebekomponente an dem Getriebegehäuse gelagert ist. Eine Beschädigung der (Gleit-)Lagerflächen durch Verschleißpartikel aus der drehmomentübertragenden Kupplung ist durch den Rückflusskanal vermieden.

Besonders bevorzugt ist vorgesehen, dass die Kupplung an einer von dem Versorgungskanal wegweisenden Ausgangsseite der drehmomentübertragenden Kupplung sowie der Rückflusskanal mit einem Ölsumpf fluidisch kommunizieren. Unabhängig davon, ob das Schmieröl im regulären Betrieb über die drehmomentübertragenden Kupplung oder in einem Betrieb mit einem nicht ausreichenden Förderdruck über den Rückflusskanal strömt, kann das Schmieröl in dem Ölsumpf gesammelt und von dort wiederverwendet werden. Der Massentransport des Schmieröls von der drehmomentübertragenden Kupplung sowie von dem Rückflusskanal zu Ölsumpf kann schwerkraftgetrieben erfolgen. Beispielsweise kann Schmieröl an der Ausgangsseite der drehmomentübertragenden Kupplung abtropfen und von einem Auffangbecken zum Ölsumpf geführt werden, sofern das Auffangbecken nicht bereits der Ölsumpf selbst sein sollte. Der Rückflusskanal kann beispielsweise in eine zum Ölsumpf führende Abfuhrrinne führen, sofern der Rückflusskanal nicht bereits in den Ölsempf selbst einmünden sollte.

Insbesondere mündet der Rückflusskanal an einer in Schwerkraftrichtung tiefsten Stelle am Umfang der ersten Getriebekomponente in die Spaltdichtung ein. Ein in der Spaltdichtung zurückbleibender Rest des Schmieröls kann dadurch vermieden werden. Zudem ist es möglich dadurch den hydrostatischen Druck in dem Rückflusskanal zu maximieren.

Vorzugsweise ist zwischen dem Zuführkanal und dem Versorgungskanal eine mit der Spaltdichtung fluidisch kommunizierende und in Umfangsrichtung geschlossen verlaufene Ringnut zur Übergabe des Schmieröls zwischen dem Zuführkanal und den Versorgungskanal in der ersten Getriebekomponente oder in dem Getriebegehäuse ausgebildet. Durch die Ringnut kann ein Versatz in Umfangsrichtung des mit der ersten Getriebekomponente mitrotierenden Versorgungskanals zum in dem Getriebegehäuse stationär ausgebildeten Zuführkanal ausgeglichen werden. Der Versorgungskanal kann dadurch mit einem annähernd gleichen oder zumindest vergleichmäßigten Förderdruck und Massenstrom mit Schmieröl beaufschlagt werden, wodurch Druckpulsationen und Schwingungen vermieden oder zumindest reduziert werden können.

Besonders bevorzugt ist die erste Getriebekomponente als eine um eine Hauptdrehachse drehbare erste Welle einer ersten Getriebestufe ausgestaltet, wobei insbesondere die zweite Getriebekomponente als eine um die Hauptdrehachse drehbare zweite Welle ausgestaltet ist, wobei vorzugsweise die zweite Welle Teil einer von der ersten Getriebestufe verschiedenen Getriebestufe oder Teil der ersten Getriebestufe ist. Dies erleichtert es die drehmomentübertragende Kupplung zwischen der erste Getriebekomponente und der zweiten Getriebekomponente als Zahnkupplung auszugestalten.

Insbesondere ist vorgesehen, dass die Kupplung im unbelasteten Zustand eine zumindest begrenzte und verschleißbehaftete Relativbewegung der ersten Getriebekomponente zu der zweiten Getriebekomponente in axialer Richtung und/oder in Umfangsrichtung grundsätzlich zulässt. Zumindest bei der Montage gegebenenfalls auch bei Lastwechseln im laufenden Betrieb kann die verschleißbehaftete Relativbewegung zugelassen werden, da auftretende Abriebpartikel entweder direkt von dem Massenstrom des Schmieröls im regulären Betrieb weggespült werden oder bei einem nicht ausreichenden Förderdruck über den Rückflusskanal abgeführt werden können. Dies ermöglicht es eine kostengünstige drehmomentübertragende Kupplung vorzusehen, die lediglich geringeren Materialanforderungen genügen braucht, ohne durch auftretenden Verschleiß die Lebensdauer des Getriebes zu beeinträchtigen.

Ein weiterer Aspekt betrifft ein Getriebe zur Wandlung eines Drehmoments und/oder einer Drehzahl, mit mindestens einer Getriebestufe und einem Schmierölsystem, da wie vorstehend beschrieben aus- und weitergebildet sein kann, zur Druckschmierung der mindestens einen Getriebestufe, wobei vorzugsweise die mindestens eine Getriebestufe als Planetengetriebe ausgestaltet ist und weiter bevorzugt ein Planetenrad über einen Planetenkanal mit druckbeaufschlagten Schmieröl geschmiert ist, wobei insbesondere der Planetenkanal mittelbar über den Versorgungskanal oder an dem Versorgungskanal vorbei mit dem Zuführkanal fluidisch kommuniziert. Das in dem Zuführkanal eingespeiste druckbeaufschlagte Schmieröl kann auch zur Schmierung des mindestens einen an einem Planetenträger drehbar gelagerten Planetenrad verwendet werden. Hierbei besteht grundsätzlich die konstruktive Freiheit die fluidische Anbindung des Planetenkanals derart zu gestalten, dass eine Abzweigung von Schmieröl aus dem Zuführkanal oder aus dem Versorgungskanal an den Planetenkanal erfolgt. Das Getriebe kann insbesondere wie vorstehend beschrieben aus- und weitergebildet sein. Mit Hilfe des Rückflusskanals des Schmierölsystems kann mit Verschleißpartikeln aus der drehmomentübertragenden Kupplung kontaminiertes Schmieröl in Betriebssituationen mit einem zu niedrigen Förderdruck schwerkraftgetrieben abgeführt werden, so dass eine Beschädigung durch Verschleißpartikel vermieden und eine hohe Lebensdauer eines druckgeschmierten Getriebe ermöglicht ist.

Ein weiterer Aspekt betrifft ein Windgetriebe für eine Windkraftanlage mit einem Schmierölsystem, das wie vorstehend beschrieben aus- und weitergebildet sein kann, zur Druckschmierung und/oder einem Getriebe, das wie vorstehend beschrieben aus- und weitergebildet sein kann, zur Wandlung eines Drehmoments und/oder einer Drehzahl, wobei insbesondere eine Eingangskupplung zum Ankuppeln einer zum Einleiten eines windkraftgenerierten Drehmoments vorgesehenen Windrotorwelle und/oder eine Ausgangskupplung zum Ankuppeln eines zur industriellen Stromerzeugung vorgesehenen Generators vorgesehen sind/ist. Das Windgetriebe kann insbesondere wie vorstehend beschrieben aus- und weitergebildet sein. Das Windgetriebe kann zur industriellen Stromerzeugung dimensioniert sein und kann hierzu entsprechend groß, stabil und schwer ausgestaltet sein. Mit Hilfe des Rückflusskanals des Schmierölsystems kann mit Verschleißpartikeln aus der drehmomentübertragenden Kupplung kontaminiertes Schmieröl in Betriebssituationen mit einem zu niedrigen Förderdruck schwerkraftgetrieben abgeführt werden, so dass eine Beschädigung durch Verschleißpartikel vermieden und eine hohe Lebensdauer eines druckgeschmierten Windgetriebe ermöglicht ist.

Die Windkraftanlage ist insbesondere als eine industrielle Windkraftanlage ausgestaltet. Industrielle Windkraftanlagen sind vornehmlich zur Energieerzeugung aus Windkraft ausgestaltet, wobei aus der Windkraft gewonnene elektrische Energie insbesondere in ein öffentliches Stromnetz eingeleitet werden kann, um Energieverbraucher mit regenerativ erzeugter Energie versorgen zu können. Ein für eine industrielle Windkraftanlage ausgestaltetes Windkraftgetriebe ist insbesondere für eine Leistung über 1,0 MW, vorzugsweise über 5,0 MW und besonders bevorzugt über 7,5 MW ausgelegt und entsprechend robust und großvolumig ausgestaltet.

Ein weiterer Aspekt der Erfindung betrifft einen Antriebsstrang für eine Windkraftanlage mit einer mit einem windkraftangetriebenen Rotor verbindbaren Rotorwelle, einer Motorwelle einer im Generatormodus betreibbaren elektrischen Maschine, einem die Rotorwelle mit der Motorwelle drehmomentübertragend verbindenden Getriebe, das insbesondere wie vorstehend beschrieben aus- und weitergebildet sein kann, zur Wandlung eines Drehmoments und einer Drehzahl. Der Antriebsstrang kann insbesondere wie vorstehend beschrieben aus- und weitergebildet sein, wobei der Antriebsstrang insbesondere für eine Anwendung in einer industriellen Windkraftanlage ausgelegt und dimensioniert ist. Mit Hilfe des Rückflusskanals des Schmierölsystems kann mit Verschleißpartikeln aus der drehmomentübertragenden Kupplung kontaminiertes Schmieröl in Betriebssituationen mit einem zu niedrigen Förderdruck schwerkraftgetrieben abgeführt werden, so dass eine Beschädigung durch Verschleißpartikel vermieden und eine hohe Lebensdauer eines druckgeschmierten Antriebsstrangs ermöglicht ist.

Ein weiterer Aspekt der Erfindung betrifft eine Windkraftanlage zur Erzeugung elektrischer Energie aus Windenergie, mit einem Rotor zur Bereitstellung eines Drehmoments aus Windenergie, einem mit dem Rotor gekoppelten Getriebe, das insbesondere wie vorstehend beschrieben aus- und weitergebildet sein kann, zur Wandlung des Drehmoments und einem Generator zur Erzeugung elektrischer Energie aus dem von dem Getriebe eingeleiteten Drehmoment. Die Windkraftanlage kann insbesondere wie vorstehend beschrieben aus- und weitergebildet sein. Vorzugsweise weist die Windkraftanlage einen Antriebsstrang auf, der wir vorstehend beschrieben aus- und weitergebildet sein kann. Mit Hilfe des Rückflusskanals des Schmierölsystems kann mit Verschleißpartikeln aus der drehmomentübertragenden Kupplung kontaminiertes Schmieröl in Betriebssituationen mit einem zu niedrigen Förderdruck schwerkraftgetrieben abgeführt werden, so dass eine Beschädigung durch Verschleißpartikel vermieden und eine hohe Lebensdauer einer druckgeschmierten Windkraftanlage ermöglicht ist.

Ein weiterer Aspekt betrifft ein Industriegetriebe für eine Industrie-Applikation, mit einem Schmierölsystem, das wie vorstehend beschrieben aus- und weitergebildet sein kann, zur Druckschmierung und/oder einem Getriebe, das wie vorstehend beschrieben aus- und weitergebildet sein kann, zur Wandlung eines Drehmoments und/oder einer Drehzahl, wobei insbesondere eine Eingangskupplung zum Ankuppeln eines zur Einleitung einer Antriebsleistung vorgesehenen Antriebsmotor und/oder eine Ausgangskupplung zum Ankuppeln eines mechanischen Arbeitsmittels vorgesehen ist/sind. Das Industriegetriebe kann insbesondere wie vorstehend beschrieben aus- und weitergebildet sein. Das Industriegetriebe kann zur Leistungswandlung in industriellen Anwendungen dimensioniert sein, die sich insbesondere durch extrem hohe zu übertragene Leistungen und/oder Drehmomente auszeichnen, und kann hierzu entsprechend groß, stabil und schwer ausgestaltet sein. Mit Hilfe des Rückflusskanals des Schmierölsystems kann mit Verschleißpartikeln aus der drehmomentübertragenden Kupplung kontaminiertes Schmieröl in Betriebssituationen mit einem zu niedrigen Förderdruck schwerkraftgetrieben abgeführt werden, so dass eine Beschädigung durch Verschleißpartikel vermieden und eine hohe Lebensdauer eines druckgeschmierten Industriegetriebe ermöglicht ist.

Ein weiterer Aspekt der Erfindung betrifft eine Industrie-Applikation mit einem Industriegetriebe, das wie vorstehend beschrieben aus- und weitergebildet sein kann, wobei das Industriegetriebe mindestens eine zu schmierenden Getriebekomponente und mindestens eine Schmierstoffübergabeanordnung, die wie vorstehend beschrieben aus- und weitergebildet sein kann, zur Förderung von Schmiermittel an die zu schmierende Getriebekomponente aufweist. Die Industrie-Applikation kann ein Antriebsmittel aufweisen, das beispielsweise als elektrische Maschine, Brennkraftmaschine, Hydraulikmotor oder windkraftgetriebener Rotor ausgestaltet sein kann. Das Antriebsmittel kann mit dem Industriegetriebe zur Wandlung eines Drehmoments und einer Drehzahl der von dem Antriebsmittel erzeugten Leistung gekoppelt sein, wobei das Industriegetriebe wie vorstehend beschrieben aus- und weitergebildet sein kann. Das Industriegetriebe der Industrie-Applikation kann wiederum drehmomentübertragend mit einem mechanischen Arbeitsmittel gekoppelt sein, in dem über das Industriegetriebe eingeleitete mechanische Energie genutzt werden kann. Bei dem mechanischen Arbeitsmittel handelt es sich beispielsweise um eine Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse, Schrottpresse, Zerkleinerer für recyclingfähige Materialen aus, gegebenenfalls zuvor getrennten und/oder sortierten, Abfällen oder Ähnliches. Die Industrie-Applikation kann insbesondere wie vorstehend beschrieben aus- und weitergebildet sein. Mit Hilfe des Rückflusskanals des Schmierölsystems kann mit Verschleißpartikeln aus der drehmomentübertragenden Kupplung kontaminiertes Schmieröl in Betriebssituationen mit einem zu niedrigen Förderdruck schwerkraftgetrieben abgeführt werden, so dass eine Beschädigung durch Verschleißpartikel vermieden und eine hohe Lebensdauer einer druckgeschmierten Industrie-Applikation ermöglicht ist.

Ein weiterer Aspekt der Erfindung betrifft ein Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in dem Schmierölsystem, das wie vorstehend beschrieben aus- und weitergebildet sein kann, oder in dem Getriebe, das wie vorstehend beschrieben aus- und weitergebildet sein kann, vorgesehenen Bestandteile, wobei die Datenpakete dazu hergerichtet sind bei einer Verarbeitung durch eine Datenverarbeitungseinrichtung zum Betrieb einer Werkzeugmaschine zur additiven Fertigung von Vorrichtungen eine additive Herstellung der Bestandteile des Schmierölsystems oder des Getriebes, insbesondere durch 3D-Druck, und/oder bei einer Verarbeitung durch eine Datenverarbeitungseinrichtung zur Durchführung einer technischen Simulation eine Simulation der Funktionsweise des Schmierölsystems oder des Getriebes durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen und/oder unterschiedlicher tribologischer Randbedingen zu erbringen und gegebenenfalls mit an einer real produzierten erfindungsgemäßen Vorrichtung und/oder an einem Prototyp der erfindungsgemäßen Vorrichtung ermittelten Messdaten zu vergleichen. Die Datenpakete des Datenagglomerat sind an die erfindungsgemäße Ausgestaltung der jeweiligen vorstehend beschriebenen erfindungsgemäßen Vorrichtung, das heißt das Schmierölsystems und/oder das Getriebe speziell angepasst, um die erfindungsgemäße Wechselwirkung der Bestandteile der erfindungsgemäßen Vorrichtung bei der Verarbeitung in der Datenverarbeitungseinrichtung adäquat abbilden zu können. Die Datenpakete können insbesondere räumlich verteilt gespeichert sein, aber derart aneinander angepasst sein, dass in dem Fall, dass alle Datenpakete in einer gemeinsamen Datenverarbeitungseinrichtung zusammengeführt sind, das so zusammengesetzte Datenagglomerat alle erforderlichen Daten für eine additive Fertigung und/oder eine technische Simulation mit Hilfe der Datenverarbeitungseinrichtung für die erfindungsgemäße Vorrichtung bereitstellt. Beispielsweise sind die Datenpakete jeweils separate Teile einer Datenbibliothek ("Library"), die zur Ausbildung des Datenagglomerats zusammengeführt und bezüglich ihrer relativen Abmessungen zueinander und/oder absoluten Abmessungen und/oder Werkstoffeigenschaften korrespondierend zu der jeweiligen erfindungsgemäßen Vorrichtung aneinander angepasst sind. Das Datenagglomerat kann in der Art eines sogenannten "digital twin" eine virtuelle Verkörperung der jeweiligen erfindungsgemäßen Vorrichtung darstellen, die eine virtuelle Untersuchung in Form einer Simulation oder eine reale Vergegenständlichung mit Hilfe eines additiven Fertigungsverfahrens ermöglicht. Ein derartiger digitaler Zwilling ist beispielsweise in US 2017/286572 A1 dargestellt, auf dessen Offenbarungsgehalt als Teil der Erfindung hiermit Bezug genommen wird.

Wenn die Datenverarbeitungseinrichtung der Werkzeugmaschine das Datenagglomerat verarbeitet, wird die erfindungsgemäße Vorrichtung hergestellt, so dass nach der Verarbeitung des Datenagglomerats in der Datenverarbeitungseinrichtung die erfindungsgemäße Vorrichtung, zumindest in Form eines Prototyps, erhalten wird. Insbesondere kann jeweils ein Datenpaket einen separat ausgeführten Bestandteil der jeweiligen zugeordneten erfindungsgemäßen Vorrichtung abbilden, so dass die einzelnen Bestandteile in ihrer Relativlage und/oder Relativbeweglichkeit leicht tatsächlich und/oder virtuell zusammengesetzt werden können, um die erfindungswesentlichen Wechselwirkungen zu realisieren. Insbesondere ist es möglich mit Hilfe der jeweiligen Datenpakete die verschiedenen Bestandteile der jeweiligen Vorrichtung separat und gegebenenfalls aus unterschiedlichen Materialen durch additive Fertigung zu erzeugen und nachfolgend zu einem Prototyp der jeweiligen Vorrichtung zusammenzusetzen. Die Aufteilung der Daten des Datenagglomerats auf verschiedene Datenpakete ermöglicht dadurch in einfacher Weise eine sequentielle additive Fertigung von relativ zueinander bewegbaren Bestandteilen der jeweiligen Vorrichtung in Form eines Bausatzes ("Kit of parts"), der dazu hergerichtet ist für die erfindungsgemäße Wechselwirkung der Bestandteile des Prototyps für die Lösung des der Erfindung zu Grunde liegenden Problems nur noch sinnfällig zusammengesetzt zu werden.

Zusätzlich oder alternativ ist es möglich mit Hilfe der Datenpakete des Datenagglomerats in einer virtuellen Umgebung während einer technischen Simulation die einzelnen Bestandteile der jeweiligen Vorrichtung, ihre Wechselwirkungen, den physikalische Zustand und/oder die Veränderung physikalischer Parameter in Abhängigkeit verschiedener Randbedingungen und/oder über die Zeit der zugehörigen erfindungsgemäßen Vorrichtung zu berechnen und/oder vorherzusagen sowie für die Überprüfung, ob die erfindungsgemäße Vorrichtung auf Basis der angenommenen Ausgestaltung und unter Berücksichtigung der angenommen simulierten Einflüsse für den beabsichtigten Einsatzzweck gut genug geeignet ist, weiterzuverwenden. Wenn das Datenagglomerat von einer die Simulationsumgebung abbildenden Datenverarbeitungseinrichtung verarbeitet wird, ist es möglich das Verhalten der erfindungsgemäßen Vorrichtung unter Berücksichtigung von, sich insbesondere verändernden, Randbedingungen untersuchen zu können. Dadurch ist es beispielsweise möglich Fliehkrafteffekte bei einzelnen Bestandteilen der erfindungsgemäßen Vorrichtung in Abhängigkeit von verschiedenen statischen und/oder dynamischen Lasten und/oder unterschiedlichen Betriebstemperaturen zu untersuchen, wobei derartige Simulationsergebnisse in die Erstellung eines Dauerfestigkeitsnachweis einfließen können. Vorzugsweise werden die nach der Verarbeitung des Datenagglomerats in der Datenverarbeitungseinrichtung für die Simulationsumgebung erhaltenen Simulationsergebnisse gespeichert, um diese mit an einer real produzierten erfindungsgemäßen Vorrichtung und/oder an einem Prototyp der erfindungsgemäßen Vorrichtung ermittelten Messdaten zu vergleichen. Dadurch ist es möglich die Güte der mit Hilfe des Datenagglomerats erhaltenen Simulationsergebnisse zu beurteilen und/oder, insbesondere bei besonders starken Abweichungen, Messfehler und/oder eine fehlerhafte Messung zu identifizieren. Eine zerstörungsfreie Qualitätskontrolle der erfindungsgemäßen Vorrichtung ist dadurch vereinfacht und verbessert.

Durch das Datenagglomerat ist eine kostengünstige Herstellung von Prototypen und/oder computerbasierten Simulationen ermöglicht, um die Funktionsweise der betrachteten Vorrichtung zu studieren, Probleme im konkreten Anwendungsfall zu identifizieren und Verbesserungen zu finden. Die Lösung der der Erfindung zugrunde liegenden Aufgabe kann mit Hilfe des Datenagglomerats leicht und kostengünstig überprüft werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können, wobei der Schutzbereich durch die Ansprüche bestimmt wird. Es zeigen:
Fig. 1: eine schematische perspektivische Ansicht einer Windkraftanlage,
Fig. 2: eine schematische Schnittansicht eines oberen Teils eines für die Windkraftanlage aus
Fig, 1 verwendbaren Schmierölsystems und
Fig. 3: eine schematische Schnittansicht eines unteren Teils des Schmierölsystems aus Fig. 2.

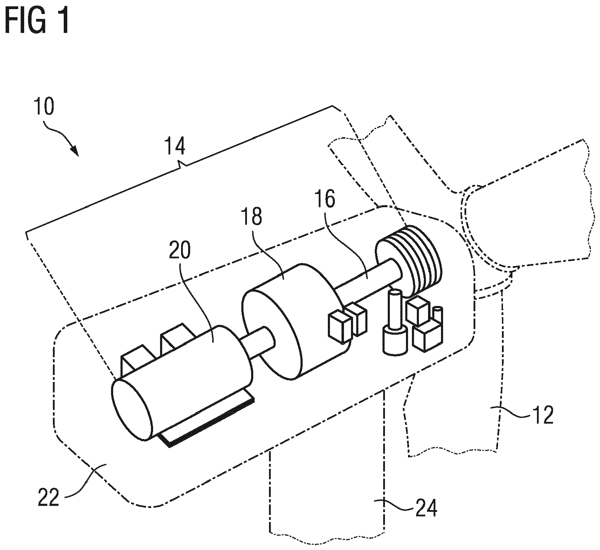

Die in Fig. 1 dargestellte Windkraftanlage 10 kann zur industriellen Erzeugung von elektrischer Energie aus Windkraft verwendet werden. Hierzu weist die Windkraftanlage 10 einen Windrotor 12 auf, der durch Wind windkraftbetrieben in Drehung versetzt werden kann. Der Windrotor 12 ist an einen Antriebsstrang 14 angekoppelt. Hierzu ist der Windrotor 12 mit einer Windrotorwelle 16 verbunden, die innerhalb des Antriebsstrangs 14 mit einem Windgetriebe 18 gekoppelt ist, um das über den Windrotor 12 und die Windrotorwelle 16 eingeleitete Drehmoment zu wandeln. Das in dem Windgetriebe 18 gewandelte Drehmoment wird über eine Motorwelle einer im Generatormodus betriebenen elektrischen Maschine zugeführt, die einen Generator 20 ausbilden kann. Die von der elektrischen Maschine erzeugte elektrische Energie kann einer wiederaufladbaren Batterie und/oder einem Stromnetz zugeführt werden. Der Antriebsstrang 14 ist im dargestellten Ausführungsbeispiel vollständig in einer Gondel 22 untergebracht, die an einem oberen freien Ende eines Standturms 24 angebracht ist. Der Windrotor 12, das Windgetriebe 18 und der Generator 20 können koaxial zueinander angeordnet sein und vorzugsweise zur Horizontalen angeschrägt verlaufen.

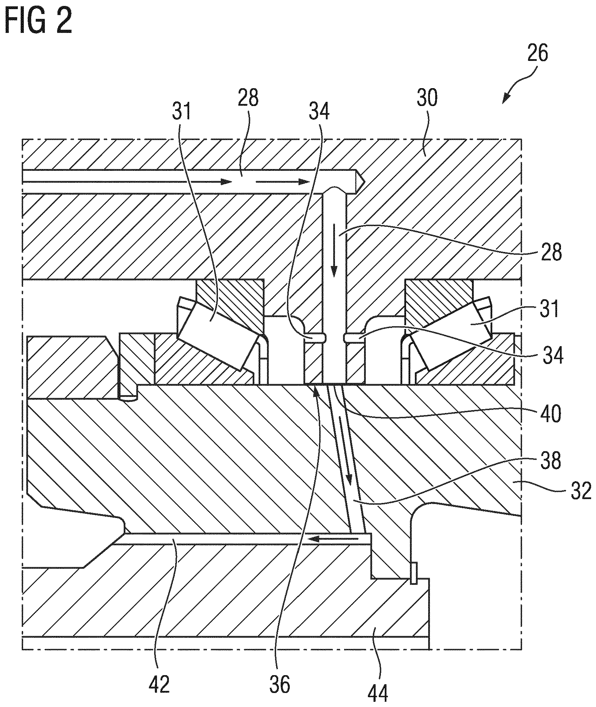

Das in Fig. 2 dargestellte Schmierölsystem 26 ist zwar als Teil des Windgetriebes 18 dargestellt, kann aber auch ohne signifikante konstruktive Änderungen Teil eines nicht explizit dargestellten Industriegetriebes sein, bei dem im Vergleich zum Windgetriebe 18 der Leistungsfluss in umgekehrter Richtung erfolgen könnte. Das Schmierölsystem 26 ist zur Druckschmierung ausgestaltet, bei dem im bestimmungsgemäßen regulären Betrieb, für den das Schmierölsystem 26 ausgelegt ist, ein Schmieröl mit einem erhöhten Förderdruck gefördert wird. Hierzu kann beispielsweise eine nicht dargestellte Ölpumpe aus einem Ölsumpf Schmieröl ansaugen und das Schmieröl mit dem beabsichtigten Förderdruck in einen Zuführkanal 28 fördern. Der Zuführkanal 28 ist in einem feststehenden Getriebegehäuse 30 ausgebildet. Im dargestellten Ausführungsbeispiel ist der Zuführkanal 28 aus einer axialen Bohrung und einer radialen Bohrung zusammengesetzt, wobei es prinzipiell möglich ist den Zuführkanal 28 aus drei oder mehr Teilstrecken zusammenzusetzen oder nur genau eine Bohrung vorzusehen.

Mit Hilfe von zwei axial zueinander beabstandeten Lagern 31 ist eine erste Getriebekomponente 32 drehbar in dem Getriebegehäuse 30 gelagert und in radialer Richtung und/oder in axialer Richtung abgestützt. Die Lager 31 können als Gleitlager oder Wälzlager ausgestaltet sein, wobei im dargestellten Ausführungsbeispiel zwei Schrägwälzlager in O-Anordnung vorgesehen sind. Vorzugsweise ist vorgesehen, dass die Lager 31 als Schmierölverbraucher von dem Schmieröl geschmiert werden. Hierzu kann von dem Zuführkanal 28 jeweils ein Schmierkanal 34 abgehen und zu dem jeweiligen Lager 31 führen, so dass auch die Lager 31 druckgeschmiert sein können.

Die erste Getriebekomponente 32 ist in dem dargestellten Ausführungsbeispiel als Hohlwelle oder Nabe ausgestaltet. Die erste Getriebekomponente 32 kann beispielsweise Teil eines Planetenträgers einer im Drehmomentfluss nahfolgenden und als Planetengetriebe ausgestalteten Getriebestufe ausgestaltet sein. Die erste Getriebekomponente 32 ist zwischen den Lagern 31 zu dem Getriebegehäuse 30 über eine berührungslose Spaltdichtung 36 in radialer Richtung getrennt. Der Zuführkanal 28 mündet in radialer Richtung in die Spaltdichtung 36 ein. Im Wesentlichen gegenüberliegend zu dem Ende des Zuführkanals 28 beginnt mindestens ein in der ersten Getriebekomponente 32 ausgebildeter Versorgungskanal 38, der über eine Ringnut 40 mit dem Zuführkanals 28 kommuniziert und eine Schmierölübergabe ausbildet. Im dargestellten Ausführungsbeispiel ist die Ringnut 40 in der ersten Getriebekomponente 32 ausgebildet, wobei die Ringnut 40 zusätzlich oder alternativ auch in dem Getriebegehäuse 30 ausgebildet sein kann. Zudem ist es möglich, dass mehrere Versorgungskanäle 38 in Umfangsrichtung hintereinander und/oder in axialer Richtung nebeneinander vorgesehen sind.

Der Versorgungskanal 38 führt zu einer radial inneren drehmomentübertragenden Kupplung 42 mit einer zweiten Getriebekomponente 44. Die drehmomentübertragende Kupplung 42 ist insbesondere als Zahnkupplung ausgestaltete, bei der eine Innenverzahnung der ersten Getriebekomponente 32 mit einer Außenverzahnungen der zweiten Getriebekomponente 44 durch eine axiale Relativbewegung zusammengesteckt werden kann. Die zweite Getriebekomponente 44 kann insbesondere eine Sonnenwelle einer in Drehmomentfluss vorhergehenden und als Planetengetriebe ausgestalteten Getriebestufe sein. Das Schmieröl aus dem Zuführkanal 28 kann nach der Übergabe an den Versorgungskanal 38 zur Druckschmierung der drehmomentübertragenden Kupplung 42 verwendet werden.

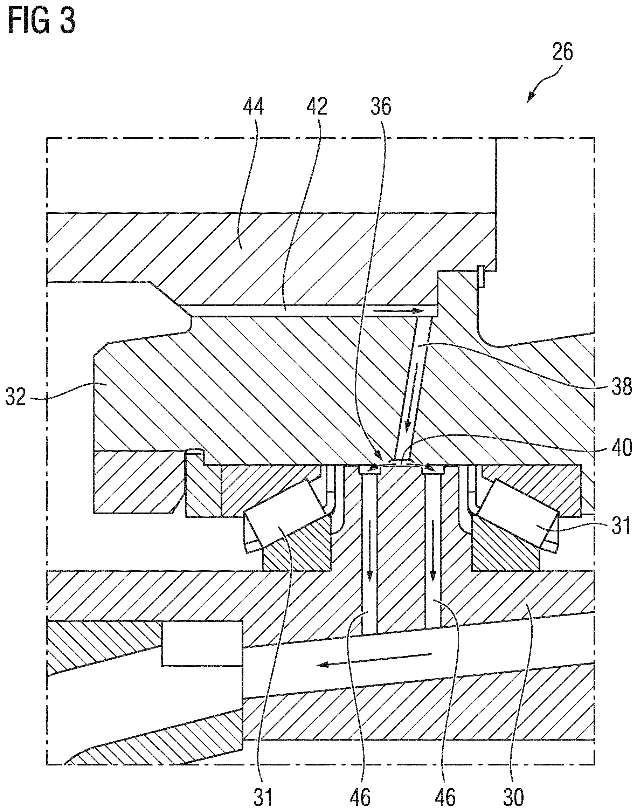

Wie in Fig. 3 dargestellt ist, kann in einer Betriebssituation mit einem nicht ausreichenden Förderdrück, beispielsweise bei Stillstand oder in einem Trudelbetrieb, das Schmieröl schwerkraftgetrieben aus der drehmomentübertragenden Kupplung 42 herauslaufen, so dass das Schmieröl in dem Fall, dass der Versorgungskanal 38 absichtlich oder unabsichtlich in einer Umfangswinkellage positioniert ist, in welcher der Versorgungskanal 38 an der in Schwerkraftrichtung niedrigsten Stelle angeordnet ist, entgegen der intendierten Fließrichtung in den Versorgungskanal 38 fließen kann. Das in dem Versorgungskanal 38 stehende Schmieröl stellt einen hydrostatischen Druck bereit, der Schmieröl als Leckage in die Spaltdichtung drückt.

Damit das gegebenenfalls mit Abriebpartikeln kontaminierte Schmieröl die Lager 31 nicht beeinträchtigen kann, ist jeweils in axialer Richtung zwischen der fluidischen Verbindung des Versorgungskanals 38 und dem jeweiligen Lager 31 jeweils ein Rückflusskanal 46 vorgesehen, der ebenfalls, insbesondere über eine teilweise oder vollständig umlaufende Rille mit der Spaltdichtung fluidisch verbunden ist. Dadurch kann das in die Spaltdichtung gedrückte kontaminierte Schmieröl in den Rückflusskanal 46 abgeführt werden, ohne dass das kontaminierte Schmieröl das in axialer Richtung der Spaltdichtdichtung 36 nachfolgende Lager 31 erreichen kann. Stattdessen kann das kontaminierte Schmieröl schwerkraftgetrieben über den Rückflusskanal 46 von dem Lager 31 weggeführt und in den Ölsumpf geleitet werden.

## Patentansprüche

1. Schmierölsystem (26) zur Druckschmierung einer drehmomentübertragenden Kupplung (42) eines Getriebes, mit
einem feststehenden Getriebegehäuse (30), wobei das Getriebegehäuse (30) einen Zuführkanal (28) zur Zuführung eines druckbeaufschlagten Schmieröls aufweist, einer relativ zu dem Getriebegehäuse (30) drehbaren ersten Getriebekomponente (32), wobei die erste Getriebekomponente (32) einen über eine Spaltdichtung (36) mit dem Zuführkanal (28) fluidisch kommunizierenden Versorgungskanal (38) zur Aufnahme des über den Zuführkanal (28) und die Spaltdichtung (36) zugeführten Schmieröls aufweist, und
einer über die Kupplung (42) drehmomentübertragend mit der ersten Getriebekomponente (32) gekoppelten zweiten Getriebekomponente (44), wobei der Versorgungskanal (38) ausgestaltet ist das Schmieröl zur Kupplung (42) zu führen, **dadurch gekennzeichnet, dass**
das Getriebegehäuse (30) mindestens einen mit der Spaltdichtung (36) fluidisch kommunizierenden Rückflusskanal (46) zur schwerkraftgetriebenen Abfuhr des Schmieröls aus der Spaltdichtung (36) aufweist.

2. Schmierölsystem (26) nach Anspruch 1, wobei der mindestens eine Rückflusskanal (46) zu dem Versorgungskanal (38) in axialer Richtung versetzt in die Spaltdichtung (36) einmündet.

3. Schmierölsystem (26) nach Anspruch 1 oder 2, wobei die erste Getriebekomponente (32) eine mit der Spaltdichtung (36) fluidisch kommunizierende Rille aufweist, wobei der Rückflusskanal (46) mittelbar über die Rille mit der Spaltdichtung (36) fluidisch kommuniziert und durch die Rille in einem von der Rille eingenommenen Axialbereich eine Spalttiefe der Spaltdichtung (36) in radialer Richtung größer als in sich an dem Axialbereich der Rille anschließenden Axialbereichen der Spaltdichtung (36) ist.

4. Schmierölsystem (26) nach einem der Ansprüche 1 bis 3, wobei das Getriebegehäuse (30) mindestens einen mit dem Zuführkanal (28) fluidisch verbundenen Schmierkanal (34) zur Schmierung mindestens eines Schmierölverbrauchers aufweist, wobei der Schmierölverbraucher mit der Spaltdichtung (36) fluidisch kommuniziert.

5. Schmierölsystem (26) nach Anspruch 4, wobei der Rückflusskanal (46) in axialer Richtung zwischen dem Versorgungskanal (38) und dem Schmierölverbraucher in die Spaltdichtung (36) einmündet.

6. Schmierölsystem (26) nach Anspruch 4 oder 5, wobei der Schmierölverbraucher als ein druckgeschmiertes Lager (31) zur Lagerung der ersten Getriebekomponente (32) an dem Getriebegehäuse (30) ausgestaltet ist.

7. Schmierölsystem (26) nach einem der Ansprüche 1 bis 6, wobei die Kupplung (42) an einer von dem Versorgungskanal (38) wegweisenden Ausgangsseite der drehmomentübertragenden Kupplung (42) sowie der Rückflusskanal (46) mit einem Ölsumpf fluidisch kommunizieren.

8. Schmierölsystem (26) nach einem der Ansprüche 1 bis 7, wobei der Rückflusskanal (46) an einer in Schwerkraftrichtung tiefsten Stelle am Umfang der ersten Getriebekomponente (32) in die Spaltdichtung (36) einmündet.

9. Schmierölsystem (26) nach einem der Ansprüche 1 bis 8, wobei zwischen dem Zuführkanal (28) und dem Versorgungskanal (38) eine mit der Spaltdichtung (36) fluidisch kommunizierende und in Umfangsrichtung geschlossen verlaufene Ringnut (40) zur Übergabe des Schmieröls zwischen dem Zuführkanal (28) und den Versorgungskanal (38) in der ersten Getriebekomponente (32) oder in dem Getriebegehäuse (30) ausgebildet ist.

10. Schmierölsystem (26) nach einem der Ansprüche 1 bis 9, wobei die erste Getriebekomponente (32) als eine um eine Hauptdrehachse drehbare erste Welle einer ersten Getriebestufe ausgestaltet ist, wobei die zweite Getriebekomponente (44) als eine um die Hauptdrehachse drehbare zweite Welle ausgestaltet ist, wobei die zweite Welle Teil einer von der ersten Getriebestufe verschiedenen Getriebestufe oder Teil der ersten Getriebestufe ist.

11. Schmierölsystem (26) nach einem der Ansprüche 1 bis 10, wobei die Kupplung (42) im unbelasteten Zustand eine zumindest begrenzte und verschleißbehaftete Relativbewegung der ersten Getriebekomponente (32) zu der zweiten Getriebekomponente (44) in axialer Richtung und/oder in Umfangsrichtung grundsätzlich zulässt.

12. Getriebe zur Wandlung eines Drehmoments und/oder einer Drehzahl, mit mindestens einer Getriebestufe und einem Schmierölsystem (26) nach einem der Ansprüche 1 bis 11 zur Druckschmierung der mindestens einen Getriebestufe, wobei die mindestens eine Getriebestufe als Planetengetriebe ausgestaltet ist und ein Planetenrad über einen Planetenkanal mit druckbeaufschlagten Schmieröl geschmiert ist, wobei der Planetenkanal mittelbar über den Versorgungskanal (38) oder an dem Versorgungskanal (38) vorbei mit dem Zuführkanal (28) fluidisch kommuniziert.

13. Windgetriebe (18) für eine Windkraftanlage (10), mit einem Schmierölsystem (26) nach einem der Ansprüche 1 bis 11 zur Druckschmierung und/oder einem Getriebe nach Anspruch 12 zur Wandlung eines Drehmoments und/oder einer Drehzahl, wobei eine Eingangskupplung zum Ankuppeln einer zum Einleiten eines windkraftgenerierten Drehmoments vorgesehenen Windrotorwelle (16) und/oder eine Ausgangskupplung zum Ankuppeln eines zur industriellen Stromerzeugung vorgesehenen Generators (20) vorgesehen sind/ist.

14. Industriegetriebe für eine Industrie-Applikation, mit einem Schmierölsystem (26) nach einem der Ansprüche 1 bis 11 zur Druckschmierung und/oder einem Getriebe nach Anspruch 12 zur Wandlung eines Drehmoments und/oder einer Drehzahl, wobei eine Eingangskupplung zum Ankuppeln eines zur Einleitung einer Antriebsleistung vorgesehenen Antriebsmotor und/oder eine Ausgangskupplung zum Ankuppeln eines mechanischen Arbeitsmittels vorgesehen ist/sind.

15. Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in dem Schmierölsystem (26) nach einem der Ansprüche 1 bis 11 oder in dem Getriebe nach Anspruch 12 vorgesehenen Bestandteile, wobei die Datenpakete dazu hergerichtet sind bei einer Verarbeitung durch eine Datenverarbeitungseinrichtung zum Betrieb einer Werkzeugmaschine zur additiven Fertigung von Vorrichtungen eine additive Herstellung der Bestandteile des Schmierölsystems (26) oder des Getriebes, insbesondere durch 3D-Druck, durchzuführen
und/oder
bei einer Verarbeitung durch eine Datenverarbeitungseinrichtung zur Durchführung einer technischen Simulation eine Simulation der Funktionsweise des Schmierölsystems (26) oder des Getriebes durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen und/oder unterschiedlicher tribologischer Randbedingen zu erbringen.
